# FASCICULE DE BREVET EUROPEEN

(11) **EP 3 286 141 B1**
(45) Date de publication et mention de la délivrance du brevet: **09.09.2020**
(21) Numéro de dépôt: 16719915.7
(22) Date de dépôt: 18.04.2016
(51) Int. Cl.: C02F 1/28, C02F 1/52, C02F 1/56

(54) **PROCÉDÉ ET DISPOSITIF DE TRAITEMENT D'UNE EAU PAR CONTACT AVEC UN MATÉRIAU ADSORBANT**
VERFAHREN UND VORRICHTUNG ZUR WASSERBEHANDLUNG DURCH KONTAKT MIT EINEM ADSORBIERENDEN MATERIAL
METHOD AND DEVICE FOR TREATING WATER BY CONTACT WITH AN ADSORBENT MATERIAL

(30) Priorité: 20.04.2015 FR 1553501
(43) Date de publication de la demande: 28.02.2018
(73) Titulaire: Suez International, 92040 Paris la Défense Cedex (FR)
(72) Inventeur: GONZALES OSPINA, Adriana, 78230 Le Pecq (FR); RATTE, David, 92500 Rueil Malmaison (FR)
(74) Mandataire: August Debouzy
(86) Numéro de dépôt international: PCT/IB2016/052192
(87) Numéro de publication internationale: WO 2016/170460

(56) Documents cités:
- FR-A1- 2 934 258
- FR-A1- 2 935 697
- US-A1- 2008 078 721

## Description

### Domaine technique

L'invention se rapporte au domaine du traitement d'une eau, en particulier pour éliminer de la matière organique et des micropolluants contenus dans une eau résiduaire urbaine, industrielle, ou dans une eau de surface ou souterraine destinée à la production d'eau potable.

Plus spécifiquement, l'invention concerne un procédé et un dispositif de traitement d'une eau mettant en œuvre un adsorbant de type charbon actif en poudre.

### Etat de la technique antérieure

Les objectifs de restauration et de la protection de la qualité des eaux ont été renforcés et impliquent désormais une gestion intégrée du cycle de l'eau.

Diverses actions sont actuellement entreprises pour limiter l'impact des matières organiques et des micropolluants, les micropolluants étant des composés présents à l'état de traces dans l'eau mais pouvant induire des effets néfastes pour ou via l'environnement et les organismes. Ces actions passent par la substitution ou la réduction à la source de production des composés chimiques les plus persistants, bioaccumulables et toxiques (PBT), cancérogènes, mutagènes, altérant la reproduction (CMR) ou des perturbateurs endocriniens.

Malgré ces efforts, et compte tenu de l'omniprésence de ces composés dans les produits d'usage quotidien et de l'activité anthropique qui les diffuse, les micropolluants sont quantifiés à des quantités encore élevées dans les eaux.

Des techniques visant à les réduire sont disponibles dans l'état de la technique antérieure mais leur intégration dans les filières de traitement doit être revisitée afin de proposer des solutions technico économiquement viables tout en gardant des performances de traitement satisfaisantes.

Dans le domaine qui englobe la présente invention, différentes techniques sont utilisées pour tenter de répondre aux objectifs d'amélioration de l'état chimique et biologique des masses d'eau ou pour rendre potable l'eau d'une ressource. Les filières de production d'eau potable et de traitement des eaux usées ont été conçues pour traiter à la fois les macropolluants (pollution organique carbonée, azote et phosphore) et les micropolluants (pesticides, HAP, PCB, phtalates, alkylphénols, hormones, substances médicamenteuses, etc.).

Les mécanismes d'élimination sont nombreux et englobent entre autres l'oxydation bactérienne ou chimique, la volatilisation, la coagulation, l'adsorption ou encore la filtration à l'aide de membranes à faibles seuils de coupure. Parmi eux, la coagulation et l'adsorption (sur la matière particulaire présente dans l'eau, sur les boues produites durant les traitements ou encore sur un matériau absorbant spécifique) semblent être deux voies principales de traitement.

En traitement complémentaire ou d'affinage, l'adsorption est réalisée dans un réacteur dédié utilisant un matériau poreux de faible granulométrie et de surface spécifique élevée. Le charbon actif est particulièrement adapté pour le traitement des micropolluants et de la matière organique.

L'élimination de ces composés par adsorption opère grâce à un phénomène de surface par lequel les molécules se fixent sur les surfaces solides du charbon actif par l'intermédiaire de différentes forces (charges électriques, interaction dipôle-dipôle, forces de Van der Waals) ou liaisons (hydrogènes, covalentes, etc.). L'adsorption peut être soit physique (non spécifique) et dépendre essentiellement de la taille de la surface, soit chimique (spécifique) due à la présence de sites chargés sur la surface du charbon actif.

Bien que la mise en œuvre de l'adsorption semble aisée, sa performance est fortement conditionnée par les caractéristiques physicochimiques inhérentes aux micropolluants et à la matière organique à traiter (taille, poids moléculaire, hydrophobicité, charge, etc.), celles du matériau utilisé (pour un charbon actif : degré d'activation, porosité et distribution de la taille des pores, surface spécifique, charge, structure, matière première à l'origine du charbon, etc.), et celles des paramètres de fonctionnement des réacteurs (taux de traitement, doses de charbon actif, de coagulants et floculants, pH, temps de contact hydraulique/vitesse de passage, temps de résidence dans le réacteur, etc.).

Un phénomène impacte particulièrement les performances de l'adsorption : la présence concomitante de matière organique et des micropolluants dans les eaux à traiter. La matière organique naturelle de petite taille (comparable aux micropolluants) dans les eaux diminue l'efficacité de l'adsorption vis-à-vis des micropolluants, car elle entre en compétition pour les sites de liaisons ou peut bloquer l'accès aux pores de la structure du charbon actif. En effet, le rapport des concentrations entre la matière organique et les polluants à éliminer par charbon actif dépasse 1000 et peut atteindre 1000000. Ce phénomène peut par conséquent conduire à un surcoût de traitement lié à l'apport de quantités plus importantes de charbon actif.

Concernant la production d'eau potable ou d'eau destinée à un usage industriel, l'élimination des matières organiques et des micropolluants dans les filières de traitement de ces types d'eau repose essentiellement sur la coagulation et sur l'adsorption. La coagulation a lieu durant l'étape de clarification et est réalisée à l'aide de différents coagulants (les sels de fer sont souvent employés). L'adsorption peut être réalisée sous différentes formes de charbon.

La configuration des installations a évolué dans le temps avec l'amélioration des connaissances. On peut ainsi distinguer trois types de traitement.

Un premier type de traitement met en œuvre des étapes de coagulation, de floculation, de clarification (décantation ou flottation) et d'adsorption sur charbon actif en grain au sein d'un filtre. Ce premier type de traitement peut comprendre des étapes intermédiaires, par exemple de filtration sur sable, d'ozonation, etc.

Un deuxième type de traitement met en œuvre une utilisation conjointe d'un coagulant et d'un charbon actif en poudre au sein d'un même ouvrage de clarification.

Le choix d'un charbon actif en poudre par rapport à un charbon actif en grain permet d'ajuster la dose à la qualité de l'eau à traiter au quotidien et de s'affranchir des problèmes de saturation propres aux charbons actifs en grain.

Une partie de la matière organique étant éliminable à la fois par coagulation et par adsorption, il y a une compétition entre le coagulant et le charbon actif vis-à-vis de l'élimination de ces molécules. Cela est doublement dommageable car le coût du traitement augmente inutilement (le traitement au charbon coûtant plus cher que le traitement au coagulant) et une partie des capacités d'adsorption du charbon actif qui aurait pu servir à l'élimination de molécules uniquement adsorbables a été neutralisée par des molécules aisément éliminables par la coagulation.

Cet inconvénient a conduit à séparer une première étape de traitement par coagulation, floculation et clarification (ouvrage amont) d'une deuxième étape de traitement au charbon actif en poudre dans un ouvrage dédié (ouvrage aval) avec la possibilité de recirculer une partie des boues de l'ouvrage aval vers l'ouvrage amont pour utiliser au maximum les capacités d'adsorption du matériau. En effet, après avoir adsorbé une certaine quantité de molécules dans l'ouvrage aval, le charbon actif en poudre atteint un état d'équilibre dans lequel il ne peut plus adsorber de molécules. La recirculation du charbon actif en poudre ayant atteint un tel état d'équilibre, depuis l'ouvrage aval jusqu'à un ouvrage amont (typiquement de clarification), met ce charbon actif en poudre en contact avec une eau davantage concentrée en molécules, rompant ainsi ledit état d'équilibre et permettant à ce charbon actif en poudre d'adsorber une quantité de molécules supplémentaire.

Ainsi, un troisième type de traitement met en œuvre une utilisation séparée du coagulant dans un ouvrage de clarification amont et du charbon actif en poudre dans un autre ouvrage aval de contact ou de clarification comprenant éventuellement une recirculation des boues de l'ouvrage aval vers l'ouvrage amont.

Concernant le traitement des eaux usées, le cadre réglementaire défini pour l'assainissement des eaux ainsi que les évolutions qu'il a suivies depuis les dernières décennies permettent aux stations d'épuration actuelles de réduire de manière significative la matière particulaire et organique des eaux usées avant qu'elles ne soient rejetées.

Les eaux traversent au minimum un prétraitement, éventuellement un traitement primaire (avec ou sans réactifs chimiques) et un traitement biologique secondaire. Les stations d'épuration n'ayant pas été conçues pour traiter les micropolluants, ces composés, de caractéristiques physicochimiques variées, sont partiellement éliminés de l'eau au travers des unités de traitement de la station d'épuration par l'intermédiaire des mécanismes suivants :
- La dégradation chimique (oxydation) et biologique (biodégradation),
- L'adsorption sur la boue (matières particulaires et biomasse),
- La volatilisation (échange gazeux avec l'atmosphère).

Après un traitement secondaire conventionnel à faible charge, un nombre varié de micropolluants demeurent dans l'eau traitée avec des concentrations variables selon les composés entre 10 et 100 ng/L. Pour réduire ces niveaux de concentration, et limiter les effets néfastes qu'ils peuvent provoquer sur ou via l'environnement, des traitements complémentaires (avancés) sont donc nécessaires. A l'heure actuelle, pour intégrer les performances technico-économiques et la facilité d'intégration des ouvrages supplémentaires dans les installations existantes, les procédés d'oxydation à l'ozone et d'adsorption sur charbon sont les plus utilisés dans les stations d'épuration des eaux usées. Ces procédés succèdent la plupart du temps aux étapes d'affinage de rétention des matières particulaires et du phosphore par filtration mécanique, sur matériau filtrant minéral et/ou coagulation floculation. Cette dernière étape permet également de réduire la matière organique encore présente dans les eaux usées clarifiées.

La demande de brevet FR 2934 258 décrit un procédé de traitement d'eau comprenant une étape d'injection d'un adsorbant dans l'eau, une étape de mélange de l'eau et l'adsorbant, une étape de filtration du mélange obtenu à une vitesse comprise entre 50 et 200 m/h au sein d'une unité de filtration comprenant une pluralité de fibres flexibles et une étape de recirculation d'adsorbant.

Le brevet FR 2 932 795 décrit un procédé associant une étape d'affinage décrite précédemment et une étape d'adsorption dans un procédé de purification des eaux en vue de leur potabilisation. Ce procédé intègre des zones de traitement distinctes au sein desquelles sont réalisées l'arrivée d'eau à traiter et l'injection de charbon actif en poudre neuf (zone de contact 1), la recirculation du charbon actif en poudre usagé (zone de contact 2) par retour des boues concentrées dans la zone 4, la floculation des eaux (zone 3) et la séparation du charbon actif en poudre de l'eau à traiter.

La demande de brevet FR 2 973 794 décrit un procédé associant la coagulation, la floculation et la décantation (lestée) de l'eau à traiter afin de garantir des faibles concentrations en carbone organique dissous dans l'eau traitée. L'installation de traitement intègre une zone de pré-contact de l'eau à traiter avec du charbon actif en poudre (zone 1) dans laquelle est recirculé le charbon actif en poudre usagé, une zone de coagulation (zone 2) suivie d'une zone de floculation lestée (zone 3) puis d'une zone de clarification lamellaire (zone 4).

Ces solutions présentent plusieurs inconvénients.

Le charbon actif n'est pas utilisé ou réutilisé de manière optimale au regard de ses capacités d'adsorption et du domaine d'application où il est le plus efficace et économiquement viable.

Si les performances de l'adsorption sont influencées par la compétition entre les composés à adsorber décrits précédemment, elle est aussi dépendante du gradient de concentration entre la solution (eau à traiter) et la surface du charbon selon le principe des isothermes d'adsorption. Selon ce principe, l'adsorption peut être positive (les molécules vont de la solution vers la surface adsorbante) ou négative (les molécules vont de la surface adsorbante vers la solution donnant lieu à un relargage plus ou moins significatif des composés, selon leurs caractéristiques). Après un temps de contact donné, pour un charbon actif usagé qui a atteint son équilibre dans la solution initiale (plus de gradient de concentration) mais qui n'est pas forcément saturé, l'adsorption ne sera encore possible que lorsqu'il sera remis en contact avec une solution plus concentrée. Dans cette solution, il existera de nouveau un gradient positif de concentration nécessaire pour l'adsorption.

Les procédés décrits dans le brevet FR 2 932 795 et les demandes de brevet FR 2 934 258 et FR 2 973 794 incluent une recirculation de charbon actif en poudre mais celle-ci est réalisée en aval de la zone dans laquelle on injecte le charbon actif en poudre neuf. De ce fait, le charbon usagé n'est pas recirculé dans les conditions idéales (gradient de concentration maximal) qui lui permettraient d'adsorber un maximum de molécules. De plus, le charbon neuf, mis en contact en premier lieu avec l'eau à traiter, aura tendance à se saturer en priorité par l'adsorption des matières organiques présentes en plus grande concentration au détriment de l'adsorption des micropolluants dont la concentration est généralement plus faible.

En outre, le troisième type de traitement relatif à la production d'eau potable ou d'eau destinée à un usage industriel, avec une clarification préalable de l'eau avant la mise en œuvre du charbon actif, est très efficace et économe en réactifs car ceux-ci sont utilisés dans le bon ordre. Toutefois, ce type de traitement implique un investissement coûteux car il impose deux ouvrages de clarification : l'un après la coagulation, l'autre après la mise en contact avec le charbon actif en poudre.

Un objectif de l'invention est de proposer un procédé et une installation de traitement d'une eau par contact avec un matériau adsorbant permettant de remédier à tout ou partie des inconvénients des procédés et installations de l'état de la technique antérieure.

### Exposé de l'invention

Cet objectif est atteint avec un procédé de traitement d'une eau, l'eau comprenant de préférence de la matière organique et des micropolluants, ce procédé comprenant :
- une étape d'adsorption dans laquelle on met l'eau en contact avec un adsorbant neuf, l'eau étant appelée « eau pré-adsorbée » avant sa mise en contact avec l'adsorbant neuf et étant appelée « eau adsorbée » après sa mise en contact avec l'adsorbant neuf, et
- une étape de recirculation dans laquelle on prélève au moins une partie de l'adsorbant neuf mis en contact avec l'eau lors de l'étape d'adsorption, cette partie prélevée constituant un adsorbant usagé,
et dans lequel lors de l'étape de recirculation on met l'adsorbant usagé en contact avec l'eau pré-adsorbée, l'eau pré-adsorbée ne subissant aucune étape de clarification dans laquelle on élimine de l'eau au moins une partie de matières en suspension qu'elle contient, ledit procédé étant caractérisé en ce qu'il comprend en outre une étape de coagulation dans laquelle on met l'eau pré-adsorbée en contact avec un ou plusieurs coagulants.

Dans le cadre de la présente invention, on entend par « eau adsorbée » une eau qui a déjà été en contact avec de l'adsorbant neuf, indépendamment de sa qualité propre ou d'un traitement qu'elle a déjà subi, et par « eau pré-adsorbée » une eau qui n'a pas encore été en contact avec l'adsorbant neuf et ce également indépendamment de sa qualité propre ou d'un traitement qu'elle a déjà subi.

Le fait de mettre l'adsorbant usagé en contact avec l'eau pré-adsorbée permet d'optimiser l'utilisation des capacités d'adsorption de l'adsorbant. En effet, après une durée de contact donnée de l'eau et de l'adsorbant neuf, lors de l'étape d'adsorption, l'adsorbant atteint un point d'équilibre ne lui permettant plus d'adsorber les molécules encore contenues dans l'eau (c'est-à-dire non-adsorbées), la concentration de cette eau en molécules ayant progressivement diminuée pendant la durée de contact. Or, cet adsorbant alors usagé n'est pas forcément saturé et est susceptible d'adsorber des molécules contenues dans une eau davantage concentrée en molécules, en l'occurrence l'eau pré-adsorbée.

Ce procédé permet de faire l'économie d'un ouvrage de clarification intermédiaire par le fait de ne pas mettre en œuvre une étape de clarification en amont de l'étape d'adsorption, tout en obtenant des performances globales comparables à des procédés connus dans l'état de la technique antérieure dans lesquels on met en œuvre un tel ouvrage de clarification intermédiaire. Cela est rendu possible notamment par l'optimisation de l'utilisation des capacités d'adsorption de l'adsorbant.

De préférence, le procédé comprend en outre une étape de maintien de contact adsorbant-eau dans laquelle on maintient le mélange constitué par l'eau et l'adsorbant en contact pendant une durée déterminée, par exemple supérieure à 5 minutes, avantageusement supérieure à 10 minutes, plus avantageusement égale à 20 minutes.

Conformément à la présente invention, l'adsorbant peut être choisi parmi tout type d'adsorbant connu de l'homme du métier tel que du charbon actif (quelle que soit sa granulométrie) ou de la résine.

De préférence, l'adsorbant est un charbon actif en poudre.

La mise en œuvre d'un tel adsorbant dans un procédé selon l'invention permet d'utiliser ou de réutiliser de manière optimale le charbon actif, comparativement aux procédés connus dans l'état de la technique antérieur, le charbon actif en poudre étant un matériau relativement onéreux.

Le procédé de l'invention permet donc aussi de réduire le coût de traitement de l'eau en réduisant les quantités d'adsorbant mises en œuvre.

De préférence, le procédé comprend en outre une étape de clarification dans laquelle on sépare l'eau adsorbée des matières en suspension qu'elle contient.

Au sens de l'invention, cette étape de clarification peut être réalisée par tout moyen connu de l'homme du métier, par exemple par décantation (par exemple sur lit de boue pulsée, et/ou à recirculation de boue, etc.), par flottation ou encore par filtration.

Selon l'invention, le procédé comprend une étape de coagulation dans laquelle on met l'eau pré-adsorbée en contact avec un ou plusieurs coagulants, typiquement des sels de fer (par exemple du chlorure ferrique) ou de l'alun.

Une telle étape de coagulation permet d'éliminer une partie de la matière organique contenue dans l'eau avant de mettre cette eau en contact avec l'adsorbant neuf. La matière organique naturelle de petite taille, comparable aux micropolluants, présente dans les eaux que l'on souhaite typiquement traiter à l'aide d'un tel procédé, diminue l'efficacité de l'adsorption vis-à-vis des micropolluants, car cette matière organique et les micropolluants entrent en compétition pour accéder à des sites de liaison de l'adsorbant. Une telle matière organique de petite taille peut ainsi bloquer l'accès à des pores de la structure de l'adsorbant, et réduire ainsi l'efficacité de cet absorbant pour adsorber les micropolluants. Typiquement, le rapport des concentrations entre la matière organique et les micropolluants que l'on souhaite éliminer à l'aide de l'adsorbant dépasse 1000 et peut atteindre 1000000. Ainsi, une telle étape de coagulation permet aussi de réduire le coût de traitement de l'eau en réduisant les quantités d'adsorbant mises en œuvre.

De préférence, le procédé comprend en outre une étape de maintien de contact coagulant-eau dans laquelle l'eau pré-adsorbée ayant subie l'étape de coagulation est stockée dans une enceinte pendant une durée supérieure à 1 minute, avantageusement supérieure à 5 minutes, plus avantageusement égale à 10 minutes.

L'eau pré-adsorbée subissant une telle étape de maintien de contact coagulant-eau peut comprendre de l'adsorbant usagé prélevé lors de l'étape de recyclage.

Une telle étape de maintien de contact coagulant-eau optimise l'efficacité du procédé, en particulier en termes de quantité d'adsorbant. Plus spécifiquement, l'étape de maintien de contact coagulant-eau permet de limiter la compétition entre matière organique et micropolluants (voir plus haut) et d'améliorer les performances globales du procédé, en particulier lorsqu'elle est réalisée après l'étape de coagulation.

Dans un autre mode de réalisation de l'invention, le procédé comprend une étape de coagulation supplémentaire dans laquelle on met l'eau adsorbée en contact avec un ou plusieurs coagulants, typiquement des sels de fer (par exemple du chlorure ferrique) ou de l'alun. Une telle étape de coagulation supplémentaire permet notamment de favoriser la séparation de l'adsorbant et de l'eau.

Selon une caractéristique avantageuse de l'invention, le procédé peut comprendre en outre une étape de floculation dans laquelle on met l'eau en adsorbée ou pré-adsorbée en contact avec un agent de floculation, typiquement un polymère.

De préférence, l'étape de floculation est réalisée après l'étape de maintien de contact coagulant-eau.

Avantageusement, l'eau soumise au traitement peut être :
- une eau résiduaire urbaine ou industrielle, ou
- une eau de surface ou souterraine destinée à la production d'eau potable ou à un usage industriel.

La présente invention concerne aussi une installation de traitement d'une eau, cette eau comprenant de préférence de la matière organique et des micropolluants, cette installation étant agencée pour mettre en œuvre un procédé tel que décrit ci-dessus, cette installation comprenant :
- une zone d'adsorption apte à mettre l'eau en contact avec un adsorbant neuf,
- une branche de recirculation apte à prélever au moins une partie de l'adsorbant neuf mis en contact avec l'eau dans la zone d'adsorption,
la branche de recirculation étant agencée pour mettre la partie de l'adsorbant prélevée en contact avec l'eau se trouvant en amont de la zone d'adsorption, ladite installation ne comprenant pas, en amont de la zone d'adsorption, un ouvrage de clarification agencé pour éliminer de l'eau au moins une partie de matières en suspension qu'elle contient, ladite installation étant caractérisée en ce qu'elle comprend une zone de coagulation agencée pour mettre l'eau en contact avec un ou plusieurs coagulants, la zone de coagulation étant située en amont de la zone d'adsorption.

De manière non limitative, la branche de recirculation peut être agencée pour réinjecter l'adsorbant usagé dans au moins l'une des zones de l'installation suivantes :
- dans l'enceinte permettant de mettre en œuvre l'étape de contact ; et/ou
- dans une zone située entre ladite enceinte et la zone d'adsorption ; et/ou
- dans une zone de coagulation agencée pour mettre en œuvre l'étape de coagulation ; et/ou
- dans une zone située entre la zone de coagulation et ladite enceinte.

### Description des figures et modes de réalisation

D'autres avantages et particularités de l'invention apparaîtront à la lecture de la description détaillée de mises en œuvre et de modes de réalisation nullement limitatifs, et de :
- la FIGURE 1 annexée qui schématise un mode de réalisation de l'invention,
- la FIGURE 2 annexée qui présente une comparaison entre les résultats obtenus avec un mode de réalisation de l'art antérieur et les résultats obtenus un mode de réalisation de l'invention

Les modes de réalisation décrits ci-après étant nullement limitatifs, on pourra notamment considérer des variantes de l'invention ne comprenant qu'une sélection de caractéristiques décrites, isolées des autres caractéristiques décrites (même si cette sélection est isolée au sein d'une phrase comprenant ces autres caractéristiques), si cette sélection de caractéristiques est suffisante pour conférer un avantage technique ou pour différencier l'invention par rapport à l'état de la technique antérieure. Cette sélection comprend au moins une caractéristique, de préférence fonctionnelle sans détails structurels, ou avec seulement une partie des détails structurels si cette partie uniquement est suffisante pour conférer un avantage technique ou pour différencier l'invention par rapport à l'état de la technique antérieure.

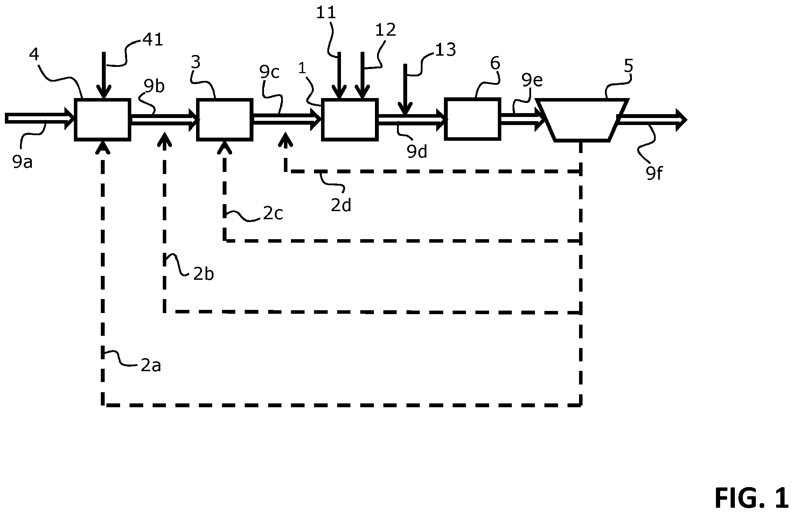

Dans l'exemple de réalisation de la FIGURE 1, une installation selon l'invention est agencée pour traiter une eau acheminée successivement dans différentes zones 1, 3, 4, 5, 6 de cette installation. L'acheminement de l'eau est représenté par les flèches horizontales 9a, 9b, 9c, 9d, 9e, 9f.

Cette installation comprend une zone d'adsorption 1.

L'eau arrive dans la zone d'adsorption 1 par un canal 9c.

La zone d'adsorption 1 est agencée pour mettre l'eau en contact avec un adsorbant neuf (étape d'adsorption). Avant sa mise en contact avec l'adsorbant neuf, c'est-à-dire avant d'entrer dans la zone d'adsorption 1, l'eau est appelée « eau pré-adsorbée ». Après sa mise en contact avec l'adsorbant neuf dans la zone d'adsorption 1, l'eau est appelée « eau adsorbée ».

L'adsorbant neuf est typiquement du charbon actif en poudre. L'adsorbant neuf est par exemple injecté dans la zone d'adsorption 1 par tout moyen d'injection 11 approprié.

La zone d'adsorption 1 est par exemple un réacteur, notamment de type bâche agitée, ou encore un système d'injection en ligne d'adsorbant neuf.

L'eau adsorbée sort de la zone d'adsorption 1 par un canal 9d.

Dans l'exemple de la FIGURE 1, l'eau adsorbée sortant de la zone d'adsorption 1 arrive dans une zone de maintien de contact adsorbant-eau 6 par le canal 9d.

La zone de maintien de contact adsorbant-eau 6 est agencée pour réaliser une étape de maintien de contact adsorbant-eau dans laquelle on maintient le mélange constitué par l'eau et l'adsorbant dans cette zone 6 pendant une durée déterminée, par exemple supérieure à 5 minutes, avantageusement supérieure à 10 minutes, plus avantageusement égale à 20 minutes.

Cette zone de maintien de contact adsorbant-eau 6 peut consister en une cuve distincte de la zone d'adsorption 1, par exemple tel qu'illustré en FIGURE 1.

Alternativement, la zone de maintien de contact adsorbant-eau 6 et la zone d'adsorption 1 peuvent consister en une seule et même zone (non illustré), auquel cas on réalise dans cette zone à la fois l'étape d'adsorption et l'étape de maintien de contact adsorbant-eau.

Dans l'exemple de la FIGURE 1, l'eau adsorbée sortant de la zone de maintien de contact adsorbant-eau 6 arrive dans un ouvrage de clarification 5 par le canal 9e.

Cet ouvrage de clarification 5 est agencé pour séparer l'eau des matières en suspension qu'elle contient.

L'ouvrage de clarification 5 est par exemple un décanteur, notamment à lit de boue pulsée et/ou à recirculation de boue, etc.), ou un flottateur.

L'ouvrage de clarification 5 peut comprendre la zone de maintien de contact adsorbant-eau 6 (non illustré). Dans ce cas, l'étape de maintien de contact adsorbant-eau et l'étape de clarification sont réalisées dans un même ouvrage.

L'eau sort de l'ouvrage de clarification 5 par un canal 9f.

L'installation comprend une branche de recirculation 2a, 2b, 2c, 2d (représenté par des flèches en pointillés en FIG.1) apte à prélever au moins une partie de l'adsorbant neuf mis en contact avec l'eau dans la zone d'adsorption 1. Cette partie prélevée constitue un adsorbant usagé.

La FIGURE 1 représente une branche de recirculation 2a, 2b, 2c, 2d réalisant :
- un prélèvement d'adsorbant usagé dans l'ouvrage de clarification 5, et
- une réinjection de cet adsorbant usagé dans différentes zones de l'installation situées en amont de la zone d'adsorption 1, de manière à mettre cet adsorbant usagé en contact avec l'eau pré-adsorbée.

La FIGURE 1 illustre une réinjection vers ces différentes zones. Toutefois, il est possible, et préférable, de réinjecter l'adsorbant usagé dans une seule zone de réinjection, par exemple dans le canal 9c (boucle 2d).

Le prélèvement d'adsorbant usagé peut être réalisé par tout moyen connu de l'homme du métier (par exemple, pompage, gravité, etc.).

L'installation de la FIGURE 1 comprend aussi une zone de coagulation 4 située en amont de la zone d'adsorption 1.

L'eau arrive dans la zone de coagulation 4 par un canal 9a.

La zone de coagulation 4 est agencée pour mettre l'eau pré-adsorbée en contact avec un ou plusieurs coagulants (étape de coagulation), typiquement des sels de fer (par exemple du chlorure ferrique) ou de l'alun.

Ce ou ces coagulants sont par exemple injectés dans la zone de coagulation 4 par tout moyen d'injection 41 approprié.

La zone de coagulation 4 peut consister en un réacteur de type bâche agitée, ou peut comprendre un système d'injection en ligne ainsi qu'un mélangeur statique.

L'eau sort de la zone de coagulation 4 par un canal 9b.

L'installation de la FIGURE 1 comprend en outre une zone de maintien de contact coagulant-eau 3 située en aval de la zone de coagulation 4 et en amont de la zone d'adsorption 1.

La zone de maintien de contact coagulant-eau 3 est agencée pour réaliser une étape de maintien de contact coagulant-eau dans laquelle on maintient le mélange constitué par l'eau et le coagulant dans cette zone 3 pendant une durée déterminée, par exemple supérieure à 1 minute, de préférence supérieure à 5 minutes, plus préférentiellement 10 minutes.

L'eau arrive dans la zone de contact 3 par le canal 9b.

La zone de contact 3 est par exemple une enceinte ou un compartiment de cuve. Une telle zone de contact 3 peut consister en une bâche agitée mécaniquement ou en une bâche chicanée.

Alternativement, la zone de maintien de contact coagulant-eau 3 et la zone de coagulation 4 peuvent consister en une seule et même zone (non illustré), auquel cas on réalise dans cette zone à la fois l'étape de coagulation et l'étape de maintien de contact coagulant-eau.

L'eau sort de la zone de contact 3 par le canal 9c.

Comme illustré en FIGURE 1, la branche de recirculation 2a, 2b, 2c, 2d peut être agencée pour réinjecter l'adsorbant usagé dans au moins l'une des zones de l'installation suivantes :
- dans la zone de maintien en contact coagulant-eau 3 (boucle 2c) ; et/ou
- dans le canal 9c (boucle 2d) ; et/ou
- dans le canal 9b (boucle 2b) ; et/ou
- dans la zone de coagulation 4 (boucle 2a).

L'invention prévoit aussi de mettre l'eau adsorbée en contact avec un ou plusieurs coagulants, typiquement des sels de fer (par exemple du chlorure ferrique) ou de l'alun, par exemple en injectant ce ou ces coagulants dans la zone d'adsorption 1 par tout moyen d'injection 12 approprié, afin de réaliser étape de coagulation supplémentaire. Ce moyen d'injection 12 du ou des coagulants peut aussi être agencé pour injecter cet agent dans d'autres zones de l'installation (non illustré).

En outre, l'invention prévoit aussi de mettre l'eau en contact avec un agent de floculation, typiquement un polymère, par exemple en injectant un tel agent de floculation en aval de la zone d'adsorption 1 par tout moyen d'injection 13 approprié.

Le moyen d'injection 13 de l'agent de floculation peut aussi être agencé pour injecter cet agent dans d'autres zones de l'installation (non illustré).

Comme illustré en FIGURE 1, l'installation comprend un seul ouvrage de clarification 5 et, plus spécifiquement, ne comprend aucun ouvrage de clarification en amont de la zone d'adsorption 1.

Les différentes zones 1, 3, 4, 5, 6 de l'installation selon l'invention peuvent consister, selon différentes combinaisons, en des ouvrages ou cuves ou réacteurs distincts, ou pour tout ou partie d'entre elles, en des compartiments d'un même ouvrage ou cuve ou réacteur.

### Essais réalisés

Les inventeurs ont réalisé des essais comparatifs de trois procédés A, B et C en utilisant une eau de surface, une dose de coagulant et trois doses de charbon actif en poudre de la même qualité, comme illustré au tableau 1 qui résume les conditions opératoires et les performances obtenues sur l'élimination de la matière organique pour chacun de ces procédés.

Le procédé A comprend les étapes suivantes, réalisées successivement :
- Etape d'injection quasi simultanée de coagulant et de charbon actif en poudre dans un même ouvrage (Ia, IIa et IIIa dans le tableau 1),
- Etape de maintien de contact coagulant-charbon actif en poudre-eau (IVa dans le tableau 1),
- Etape de décantation (Va dans le tableau 1).

Le procédé B comprend les étapes suivantes, réalisées successivement :
- Etape d'injection de coagulant (Ib et IIb dans le tableau 1),
- Etape de maintien de contact coagulant-eau (IIIb dans le tableau 1),
- Etape de décantation (IVb dans le tableau 1),
- Etape d'injection de charbon actif en poudre (Vb dans le tableau 1),
- Etape de maintien de contact charbon actif en poudre-eau (VIb dans le tableau 1),
- Etape de décantation (VIIb dans le tableau 1).

Le procédé C, correspondant au procédé selon l'invention, comprend les étapes suivantes, réalisées successivement :
- Etape d'injection de coagulant (Ic et IIc dans le tableau 1),
- Etape de maintien de contact coagulant-eau (IIIc dans le tableau 1),
- Etape d'injection de charbon actif en poudre (IVc dans le tableau 1),
- Etape de maintien de contact charbon actif en poudre-eau (Vc dans le tableau 1),
- Etape de décantation (VIc dans le tableau 1).

**Tableau 1 : Essais comparatifs des procédés A, B et C (UV = absorbance UV à 254 nm ; COD = carbone organique dissous ; tps de coag. = temps de coagulation)**

| | **Procédé A** | | |
|---|---|---|---|
| Ia | 35 mg/L de FeCl3 | 35 mg/L de FeCl3 | 35 mg/L de FeCl3 |
| IIa (tps de coag.) | 2 min | 2 min | 2 min |
| IIIa | CAP 5 mg/L | CAP 10 mg/L | CAP 15 mg/L |
| IVa | contact 20 min | contact 20 min | contact 20 min |
| Va | décantation | décantation. | décantation. |
| UV éliminé | 56 % | 73 % | 85 % |
| COD éliminé | 52 % | 65 % | 74 % |

| | **Procédé B** | | |
|---|---|---|---|
| Ib | 35 mg/L de FeCl3 | 35 mg/L de FeCl3 | 35 mg/L de FeCl3 |
| IIb (tps de coag.) | 2 min | 2 min | 2 min |
| IIIb | contact 10min | contact 10min | contact 10min |
| IVb | décantation | décantation | décantation |
| Vb | CAP 5 mg/L | CAP 10 mg/L | CAP 15 mg/L |
| VIb | contact 20 min | contact 20 min | contact 20 min |
| VIIb | décantation | décantation | décantation |
| UV éliminé | 83 % | 85 % | 90 % |
| COD éliminé | 65 % | 74 % | 78 % |

| | | **Procédé C** | |
|---|---|---|---|
| Ic | 35 mg/L de FeCl3 | 35 mg/L de FeCl3 | 35 mg/L de FeCl3 |
| IIc (tps de coag.) | 2 min | 2 min | 2 min |
| IIIc | contact 10min | contact 10min | contact 10min |
| IVc | CAP 5 mg/L | CAP 10 mg/L | CAP 15 mg/L |
| Vc | contact 20 min | contact 20 min | contact 20 min |
| VIc | décantation | décantation | décantation |
| UV éliminé | 83 % | 87 % | 90 % |
| COD éliminé | 70 % | 74 % | 78 % |

Ces essais confirment l'intérêt de séparer suffisamment dans le temps les injections de coagulant et de charbon actif en poudre pour limiter le phénomène de compétition entre matière organique et micropolluants, et obtenir de meilleures performances globales (les résultats des essais montrent que les performances sont meilleures avec les procédés B et C qu'avec le procédé A).

Ces essais confirment aussi que la clarification intermédiaire entre l'injection de coagulant et l'injection de charbon actif en poudre n'est pas nécessaire vis-à-vis du traitement des matières organiques.

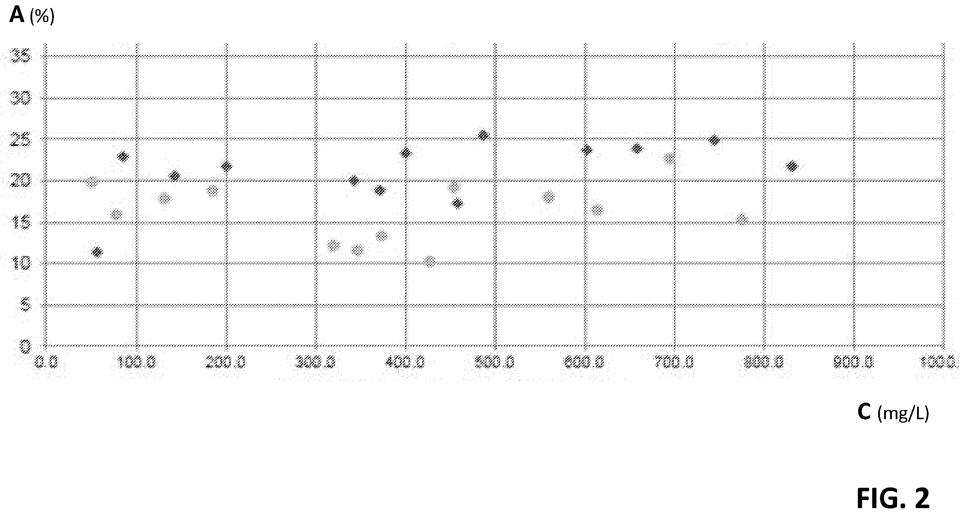

La FIGURE 2 illustre des essais comparatifs effectués entre un premier procédé connu de l'art antérieur et un second procédé conforme à un mode de réalisation de l'invention.

Les premier et deuxième procédés comportent :
- une étape d'adsorption dans laquelle on met l'eau en contact avec un adsorbant neuf, l'eau étant appelée « eau pré-adsorbée » avant sa mise en contact avec l'adsorbant neuf et étant appelée « eau adsorbée » après sa mise en contact avec l'adsorbant neuf, et
- une étape de recirculation dans laquelle on prélève au moins une partie de l'adsorbant neuf mis en contact avec l'eau lors de l'étape d'adsorption, cette partie prélevée constituant un adsorbant usagé.

Le premier procédé comprend une étape de recirculation de charbon actif en poudre usagé dans la zone d'adsorption. Cette recirculation de charbon actif usagé a lieu au même point que le charbon actif neuf, ou en amont.

Le second procédé comprend une ou plusieurs configurations pour la recirculation de charbon actif en poudre usagé (schématisées en 2a, 2b, 2c et 2d dans la figure 1). Cette recirculation de charbon actif usagé a lieu dans tous les cas avant l'injection du charbon actif neuf dans la zone d'adsorption 1 par les moyens d'adsorption 11.

En résumé, dans le premier procédé, le charbon actif usagé recirculé, c'est à dire l'adsorbant usagé, est injecté dans l'eau adsorbée, tandis que dans le deuxième procédé, le charbon actif usagé recirculé est injecté dans l'eau pré-adsorbée.

La FIGURE 2 représente aussi le pourcentage d'abattement en ordonnées et noté A en %, en fonction de la concentration de boue dans la zone d'adsorption en abscisse et notée C en mg/L, et ce, avec le premier et le second procédés.

Il apparaît que l'abattement des matières organiques et des micropolluants est supérieur avec le second procédé (représentation par des carrés foncés). Le premier procédé ne permet en effet d'obtenir que des abattements plus faibles (représentation par des ronds clairs).

Bien sûr, l'invention n'est pas limitée aux exemples qui viennent d'être décrits et de nombreux aménagements peuvent être apportés à ces exemples sans sortir du cadre de l'invention. De plus, les différentes caractéristiques, formes, variantes et modes de réalisation de l'invention peuvent être associés les uns avec les autres selon diverses combinaisons dans la mesure où ils ne sont pas incompatibles ou exclusifs les uns des autres.

## Revendications

1. Procédé de traitement d'une eau, ledit procédé comprenant :
- une étape d'adsorption dans laquelle on met l'eau en contact avec un adsorbant neuf, l'eau étant appelée « eau pré-adsorbée » avant sa mise en contact avec l'adsorbant neuf et étant appelée « eau adsorbée » après sa mise en contact avec l'adsorbant neuf, et
- une étape de recirculation dans laquelle on prélève au moins une partie de l'adsorbant neuf mis en contact avec l'eau lors de l'étape d'adsorption, cette partie prélevée constituant un adsorbant usagé,
et dans lequel lors de l'étape de recirculation on met l'adsorbant usagé en contact avec l'eau pré-adsorbée,
l'eau pré-adsorbée ne subissant aucune étape de clarification dans laquelle on élimine de l'eau au moins une partie de matières en suspension qu'elle contient,
ledit procédé étant **caractérisé en ce qu'**il comprend en outre une étape de coagulation dans laquelle on met l'eau pré-adsorbée en contact avec un ou plusieurs coagulants.

2. Procédé selon la revendication 1, **caractérisé en ce que** l'adsorbant est un charbon actif en poudre.

3. Procédé selon la revendication 1 ou 2, **caractérisé en ce qu'**il comprend en outre une étape de clarification dans laquelle on sépare l'eau adsorbée des matières en suspension qu'elle contient.

4. Procédé selon l'une quelconque des revendications 1 à 3, **caractérisé en ce qu'**il comprend en outre une étape de maintien de contact coagulant-eau dans laquelle l'eau pré-adsorbée ayant subie l'étape de coagulation est stockée dans une enceinte pendant une durée supérieure à 1 minute, avantageusement supérieure à 5 minutes, plus avantageusement égale à 10 minutes.

5. Procédé selon l'une quelconque des revendications 1 à 4, **caractérisé en ce qu'**il comprend en outre une étape de floculation dans laquelle on met l'eau adsorbée ou pré-adsorbée en contact avec un agent de floculation.

6. Procédé selon les revendications 4 et 5, **caractérisé en ce que** l'étape de floculation est réalisée après l'étape de maintien de contact coagulant-eau.

7. Procédé selon l'une des revendications 1 à 6, **caractérisé en ce que** l'eau est :
- une eau résiduaire urbaine ou industrielle, ou
- une eau de surface ou souterraine destinée à la production d'eau potable ou à un usage industriel.

8. Installation de traitement d'une eau, cette installation étant agencée pour mettre en œuvre un procédé selon l'une des revendications 1 à 7, cette installation comprenant :
- une zone d'adsorption (1) apte à mettre l'eau en contact avec un adsorbant neuf,
- une branche de recirculation (2a, 2b, 2c, 2d) apte à prélever au moins une partie de l'adsorbant neuf mis en contact avec l'eau dans la zone d'adsorption (1),
la branche de recirculation (2a, 2b, 2c, 2d) étant agencée pour mettre la partie de l'adsorbant prélevée en contact avec l'eau se trouvant en amont de la zone d'adsorption (1),
ladite installation ne comprenant pas, en amont de la zone d'adsorption (1), un ouvrage de clarification agencé pour éliminer de l'eau au moins une partie de matières en suspension qu'elle contient,
ladite installation étant **caractérisée en ce qu'**elle comprend une zone de coagulation (4) agencée pour mettre l'eau en contact avec un ou plusieurs coagulants, la zone de coagulation (4) étant située en amont de la zone d'adsorption (1).

## Patentansprüche

1. Verfahren zur Wasserbehandlung, wobei das Verfahren Folgendes umfasst:
- einen Schritt des Adsorbierens, in dem Wasser mit einem neuen Adsorptionsmittel in Kontakt gebracht wird, wobei das Wasser vor seinem In-Kontakt-Bringen mit dem neuen Adsorptionsmittel als "vor-adsorbiertes Wasser" bezeichnet wird und nach seinem In-Kontakt-Bringen mit dem neuen Adsorptionsmittel als "adsorbiertes Wasser" bezeichnet wird, und
- einen Schritt des Rückführens, in dem mindestens ein Teil des neuen Adsorptionsmittels, das während des Schritts des Adsorbierens mit Wasser in Kontakt gebracht wird, entnommen wird, wobei dieser entnommene Teil ein gebrauchtes Adsorptionsmittel darstellt,
und wobei während des Schritts des Rückführens das gebrauchte Adsorptionsmittel mit dem vor-adsorbierten Wasser in Kontakt gebracht wird,
wobei das vor-adsorbierte Wasser keinem Schritt der Klärung unterzogen wird, in dem vom Wasser mindestens ein Teil der Schwebstoffe beseitigt wird, die darin enthalten sind,
wobei das Verfahren **dadurch gekennzeichnet ist, dass** es außerdem einen Schritt der Koagulation umfasst, in dem das vor-adsorbierte Wasser mit einem oder mehreren Koagulans in Kontakt gebracht wird.

2. Verfahren nach Anspruch 1, **dadurch gekennzeichnet, dass** das Adsorptionsmittel eine pulverförmige Aktivkohle ist.

3. Verfahren nach Anspruch 1 oder 2, **dadurch gekennzeichnet, dass** es außerdem einen Schritt der Klärung umfasst, in dem das adsorbierte Wasser von den Schwebstoffen, die es enthält, getrennt wird.

4. Verfahren nach einem der Ansprüche 1 bis 3, **dadurch gekennzeichnet, dass** es außerdem einen Schritt des In-Kontakt-Haltens zwischen Koagulans und Wasser umfasst, in dem das vor-adsorbierte Wasser, das dem Schritt der Koagulation unterzogen wurde, in einem Behälter während einer Dauer von mehr als 1 Minute, vorteilhafterweise mehr als 5 Minuten, noch vorteilhafter gleich 10 Minuten, gelagert wird.

5. Verfahren nach einem der Ansprüche 1 bis 4, **dadurch gekennzeichnet, dass** es außerdem einen Schritt der Ausflockung umfasst, in dem das adsorbierte oder vor-adsorbierte Wasser mit einem Flockungsmittel in Kontakt gebracht wird.

6. Verfahren nach Anspruch 4 und 5, **dadurch gekennzeichnet, dass** der Schritt der Ausflockung nach dem Schritt des In-Kontakt-Haltens zwischen Koagulans und Wasser durchgeführt wird.

7. Verfahren nach einem der Ansprüche 1 bis 6, **dadurch gekennzeichnet, dass** das Wasser:
- ein städtisches oder industrielles Abwasser ist, oder
- ein Oberflächen- oder Grundwasser ist, das zur Herstellung von Trinkwasser oder einer industriellen Verwendung dient.

8. Anlage zur Wasserbehandlung, wobei diese Anlage angeordnet ist, um ein Verfahren nach einem der Ansprüche 1 bis 7 durchzuführen, wobei diese Anlage Folgendes umfasst:
- einen Adsorptionsbereich (1), der ausgelegt ist, um Wasser mit einem neuen Adsorptionsmittel in Kontakt zu bringen,
- einen Rückführungszweig (2a, 2b, 2c, 2d), der ausgelegt ist, um mindestens einen Teil des Adsorptionsmittels, das mit Wasser im Adsorptionsbereich (1) in Kontakt gebracht ist, zu entnehmen,
- wobei der Rückführungszweig (2a, 2b, 2c, 2d) angeordnet ist, um den Teil des entnommenen Adsorptionsmittels in Kontakt mit dem Wasser zu bringen, der sich vorgelagert vom Adsorptionsbereich (1) befindet,
- wobei die Anlage vorgelagert vom Adsorptionsbereich (1) keine Klärungsanlage umfasst, die angeordnet ist, um aus dem Wasser mindestens einen Teil der Schwebstoffe zu beseitigen, die darin enthalten sind,
- wobei die Anlage **dadurch gekennzeichnet ist, dass** sie einen Koagulationsbereich (4) umfasst, der angeordnet ist, um das Wasser mit einem oder mehreren Koagulans in Kontakt zu bringen, wobei der Koagulationsbereich (4) vorgelagert vom Adsorptionsbereich (1) angeordnet ist.

## Claims

1. A method of treating water, said method comprising:
- an adsorption step in which the water is brought into contact with a fresh adsorbent, the water being called "pre-adsorbed water" before it is brought into contact with the fresh adsorbent, and being called "adsorbed water" after it has been brought into contact with the fresh adsorbent, and
- a recirculation step in which at least part of the fresh adsorbent brought into contact with water during the adsorption step is removed, this removed part constituting a used adsorbent,
and in which, during the recirculation step, the used adsorbent is brought into contact with the pre-adsorbed water,
the pre-adsorbed water not undergoing any clarification step in which at least part of the suspended matter it contains is removed from the water,
said method being **characterized in that** it further comprises a coagulation step in which the pre-adsorbed water is brought into contact with one or more coagulants.

2. Method according to claim 1, **characterized in that** the adsorbent is a powdered activated carbon.

3. Method according to claim 1 or 2, **characterized in that** it further comprises a clarification step in which the adsorbed water is separated from the suspended matter which it contains.

4. Method according to any one of claims 1 to 3, **characterized in that** it further comprises a step of maintaining coagulant-water contact in which the pre-adsorbed water having undergone the coagulation step is stored in an enclosure for a duration greater than 1 minute, advantageously greater than 5 minutes, more advantageously equal to 10 minutes.

5. Method according to any one of claims 1 to 4, **characterized in that** it further comprises a flocculation step in which the adsorbed or pre-adsorbed water is brought into contact with a flocculation agent.

6. Method according to claims 4 and 5, **characterized in that** the flocculation step is carried out after the step of maintaining coagulant-water contact.

7. Method according to one of claims 1 to 6, **characterized in that** the water is:
- urban or industrial waste water, or
- surface or underground water intended for the production of drinking water or for industrial use.

8. Installation for treating water, this installation being arranged to implement a method according to one of claims 1 to 7, this installation comprising:
- an adsorption zone (1) capable of bringing the water into contact with a fresh adsorbent,
- a recirculation branch (2a, 2b, 2c, 2d) capable of taking at least part of the fresh adsorbent brought into contact with water in the adsorption zone (1),
the recirculation branch (2a, 2b, 2c, 2d) being arranged to bring the part of the removed adsorbent into contact with the water located upstream of the adsorption zone (1),
said installation not comprising, upstream of the adsorption zone (1), a clarification structure designed to remove from water at least part of the suspended matter which it contains,
said installation being **characterized in that** it comprises a coagulation zone (4) arranged to bring the water into contact with one or more coagulants, the coagulation zone (4) being located upstream of the adsorption zone (1).
